# EUROPEAN PATENT APPLICATION

(11) **EP 2 610 127 A2**
(43) Date of publication of application: **03.07.2013**
(21) Application number: 12198515.4
(22) Date of filing: 20.12.2012
(51) Int. Cl.: B60W 30/14

(54) **Fuel economy mode to modify cruise control for an automobile**

(30) Priority: 20.12.2011 US 201113331166
(71) Applicant: Continental Automotive Systems US, Inc., Auburn Hills, MI 48326 (US)
(72) Inventor: Schumann, Clinton, Royal Oak, MI 48067 (US)
(74) Representative: Isarpatent

(57) **Abstract**

A method of operating a cruise control system for a vehicle comprises selecting a fuel economy mode for the cruise control system and determining a desired fuel economy. A fuel economy level of the vehicle is maintained at the desired fuel economy while in the fuel economy mode for the cruise control system.

## Description

### TECHNICAL FIELD

The present disclosure relates to automotive vehicles, and more particularly to fuel economy for automotive vehicles.

### BACKGROUND

Automotive vehicles utilize cruise control systems to assist vehicle operators in maintaining vehicles at a constant speed when traveling long distances. Operation of the vehicle in cruise control mode may increase fuel economy over long distances. As is known, the vehicle operator can engage and disengaged the cruise control systems as desired. Vehicle speed is typically maintained at a constant speed over differing road terrains. However, as is known, operation of the cruise control system may be terminated by application of the brakes by the vehicle operator.

Recently adaptive cruise control (ACC) systems have been developed. ACC systems adjust the speed of the vehicle to accommodate changes in traffic speed when operating in cruise control mode. Typically, ACC systems maintain a desired distance from a forward vehicle. If the forward vehicle changes speeds or changes lanes the ACC system will return the vehicle to the cruising speed originally set by the vehicle operator. As with standard cruise control systems, the ACC systems may be terminated by application of the vehicle brakes.

The background description provided herein is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

### SUMMARY

A method of operating a cruise control system for a vehicle comprises selecting a fuel economy mode for the cruise control system and determining a desired fuel economy. A fuel economy level of the vehicle is maintained at the desired fuel economy when operating in fuel economy mode.

A method of operating a vehicle comprises selecting an operating mode for a cruise control system. At least one of a desired fuel economy and an initial cruise control speed for the vehicle are determined. A fuel supply to an engine for the vehicle is adjusted with an engine controller in communication with a fuel supply system to maintain a fuel economy level of the vehicle at the desired fuel economy when operating in a fuel economy mode.

Further areas of applicability of the present disclosure will become apparent from the detailed description provided hereinafter. It should be understood that the detailed description and specific examples, while indicating the preferred embodiment of the disclosure, are intended for purposes of illustration only and are not intended to limit the scope of the disclosure.

### BRIEF DESCRIPTION OF THE DRAWINGS

The present disclosure will become more fully understood from the detailed description and the accompanying drawings, wherein:
FIG. 1 is a schematic side view of a vehicle having a cruise control system having a fuel economy mode of the present invention;
FIG. 2 is a schematic side view illustration of the vehicle having the cruise control system of the present invention on a hill; and
FIG. 3 is a schematic diagram of an exemplary implementation of the cruise control system of the present invention for the vehicle of Figures 1-2.

### DETAILED DESCRIPTION

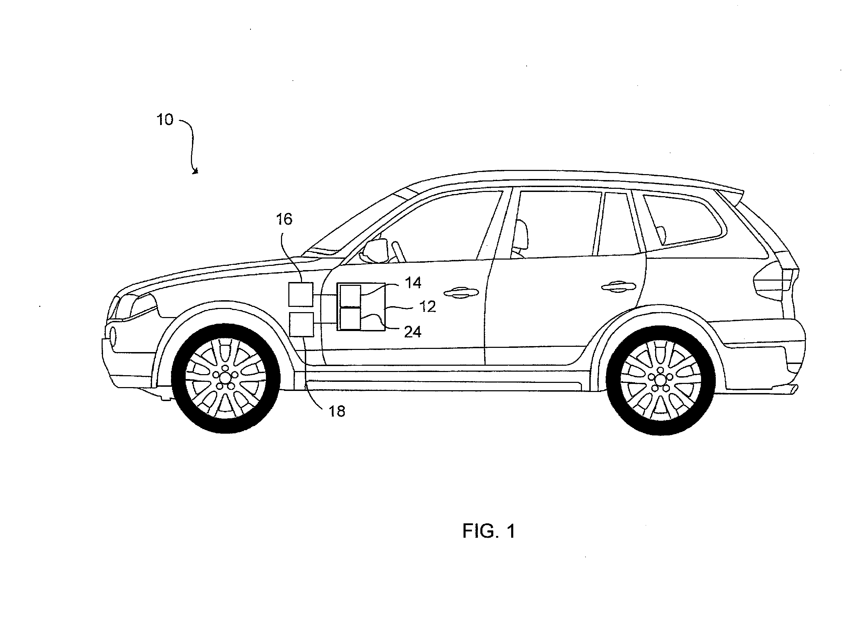

The following description is merely exemplary in nature and is in no way intended to limit the disclosure, its application, or uses. For purposes of clarity, the same reference numbers will be used in the drawings to identify similar elements. Figure 1 is a schematic illustration of a vehicle 10 having a cruise control system 12 having a standard operating mode and a fuel economy mode 14. The cruise control system 12 may also be an adaptive cruise control (ACC) system and preferably incorporates other existing vehicle 10 systems and components for simplicity, such as forward looking sensors. Throughout the application the relative directions of forward and rear are in reference to the direction which an operator for the vehicle 10 would be facing when operating the vehicle 10.

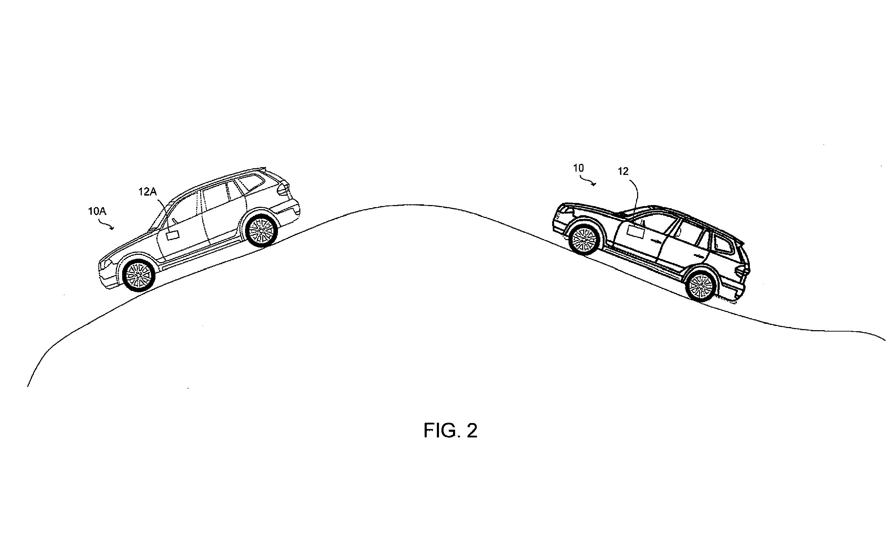

Figure 2 illustrates the vehicle 10 with the cruise control system 12 where the operating mode of the cruise control system is selected by a control device 24. In the fuel economy mode 14 the fuel efficiency of the vehicle 10 may be maintained at a desired fuel economy. The desired fuel economy may correspond to the fuel economy level for the vehicle 10 at a pre-selected speed when traveling along a flat surface. If the vehicle 10 recognizes a hill is approaching the control device 24 for the cruise control system 12 may switch to a fuel economy mode 14and maintain the vehicle at the desired fuel economy rather than at a desired speed. The vehicle 10 may have at least one sensor, such as a longitudinal gravity sensor or may utilize other vehicle systems, such as a navigation system to detect an approaching hill. The fuel economy mode 14 would allow the vehicle 10 to slow while ascending the hill and regain speed while descending the hill. The overall speed of the vehicle 10 after the hill will be approximately the same speed as before the hill while the fuel economy of the vehicle 10 is maintained above the desired fuel economy level.

In another embodiment, in a standard operating mode the cruise control system 12 maintains the speed of the vehicle 10 at the speed selected by the driver. If the cruise control system 12 is an ACC system the cruise control system 12 will adjust the speed of the vehicle 10 to maintain a predetermined distance from forward objects. In the standard operating mode the cruise control system 12 maintains the vehicle 10 at the selected speed regardless of the terrain and contours of the road and only adjusts the vehicle speed 10 based upon intervening objects as mentioned above. The speed of the vehicle 10 is typically maintained within a range of the preselected speed by an engine controller 16. The vehicle 10 speed is maintain even when encountering changes in the slope of the road, such as when ascending or descending a hill. The engine controller 16 cooperates with a fuel supply system 18 to adjust the fuel supply as required to maintain the vehicle 10 at the preselected speed.

The fuel economy mode 14 may be selected by the vehicle operator using the control device 24. In the fuel economy mode 14, the speed of the vehicle 10 may be allowed to vary while the cruise control system 12 operates to maintain a desired fuel economy. The desired fuel economy may correspond to the fuel economy level for the vehicle 10 at a pre-selected speed when traveling along a flat surface. The desired fuel economy of the vehicle 10 can be determined by the fuel economy level that is calculated when the fuel economy mode 14 of the cruise control system 12 is initiated. Thereafter, the vehicle 10 will maintain the desired fuel economy regardless of the changes in the road. Again the engine controller 16 and the fuel supply system 18 cooperate with the cruise control system 12 to operate the vehicle 10 in a manner that maintains the fuel economy as the desired fuel economy level.

A high fuel economy level is generally desirable. Therefore, maintaining the vehicle 10 at the desired fuel economy may mean allowing the fuel economy of the vehicle 10 to increase, but not allowing the fuel economy to decrease below the desired level. Alternatively, the fuel economy level may also be limited from increasing. For example, due to terrain an increase in the fuel economy level may also correspond to an increase in speed of the vehicle 10, e.g. when the vehicle 10 is travelling downhill. In order to maintain the vehicle 10 at safe operating speed the fuel economy level may be maintained at the pre-selected level and not allowed to increase outside of a predetermined range, thus, restricting the speed of the vehicle 10. In this instance, an increase in the fuel economy level would be allowable as long as the vehicle 10 is travelling within safe operating speeds.

An example of the vehicle 10 operating in the fuel economy mode 14 is illustrated in Figure 2. The vehicle 10 is in the fuel economy mode 14 as the vehicle 10 begins to ascend a hill. The speed of the vehicle 10 may be allowed to decrease to maintain the desired fuel economy level that was determined when the fuel economy mode 14 was initiated. Preferably the fuel economy mode 14 is initiated while traveling a flat surface. The fuel economy of the vehicle 10 is not allowed below the desired fuel economy level. As a result, the vehicle 10 will slow in speed while ascending the hill.

When the vehicle 10 descends the other side of the hill, illustrated by vehicle 10A in Figure 2, the speed of the vehicle 10A will again begin to increase, as a result of gravity, without requiring a decrease in fuel economy. In fact, the fuel economy level will increase. The increase in fuel economy on the descent of the hill is allowable as long as the vehicle 10A is travelling at safe operating speeds.

In the fuel economy mode 14 the engine controller 16 cooperates with the fuel system 18 to only provide the amount of fuel necessary for the desired fuel economy. Therefore, the vehicle 10 will slow while ascending the hill and regain speed when descending the hill such that, the overall speed of the vehicle 10 after the hill will be approximately the same speed as before the hill while the fuel economy of the vehicle 10 is maintained above the desired fuel economy level.

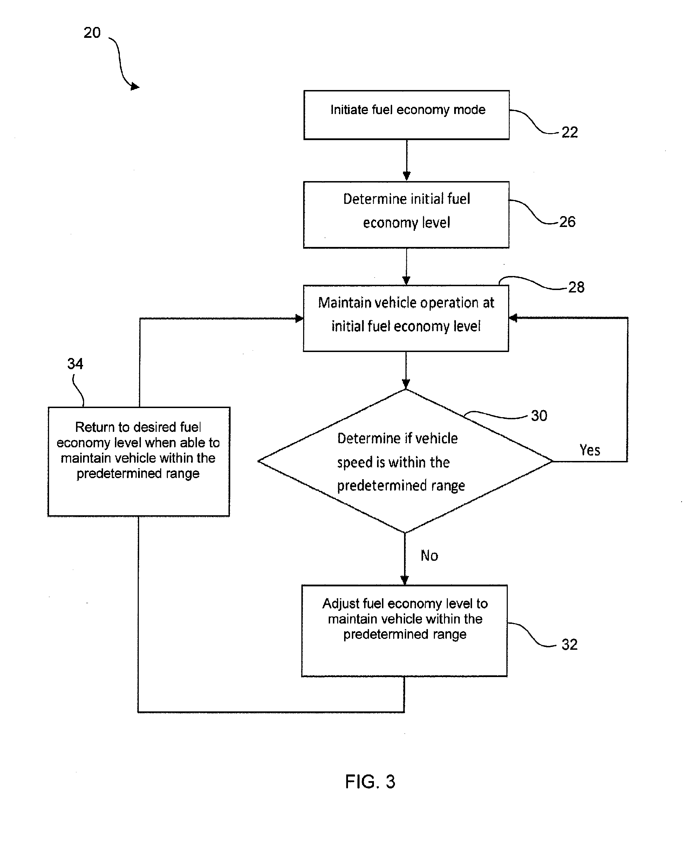

Figure 3 illustrates a method 20 for operating the vehicle 10 having the cruise control system 12 with the fuel economy mode 14. Also with reference to Figures 1 and 2, the method 20 for operating the vehicle 10 having the cruise control system 12 with the fuel economy mode 14 is described below. The fuel economy mode 14 is initiated by the operator of the vehicle 10, step 22. The fuel economy mode 14 may initiated by a control device 24. The control device 24 may be a control unit for the cruise control system 12 or may be a separate selector or switch that is part of the controls the vehicle driver uses to operate the cruise control system 12. Following initiation of the fuel economy mode 14 the cruise control system 12 determines a desired fuel economy level, step 26. The desired fuel economy level may be an average or instantaneous fuel economy for the vehicle 10 when the fuel economy mode 14 is initiated. The average fuel economy level may be an average of the fuel economy determined for a preselected period of the time, i.e. for 60 seconds of vehicle 10 operation prior to the initiation of the fuel economy mode 14. Upon initiation of the fuel economy mode 14 the vehicle 10 is operated at the desired fuel economy level, step 28. The cruise control system 12 monitors the instantaneous fuel economy of the vehicle 10.

The desired fuel economy level may be adjusted by the vehicle 10 operator through the use of the control device 24. For example, the fuel economy may be increased or decreased in an incremental manner. The adjustment of the desired fuel economy level may be similar to adjusting a preselected speed of the vehicle 10 when operating in the standard operating mode of the cruise control system 12

In fuel economy mode 14 the fuel economy level may be adjusted under selected conditions. For example, if the cruise control system 12 is an ACC system the vehicle 10 may be operated at another fuel economy level to maintain a desired distance between the vehicle 10 and a forward object. Once the forward object is no longer in the path of the vehicle 10 the cruise control system 12 may return operation to the desired fuel economy level 14.

In fuel economy mode 14 the fuel economy of the vehicle 10 is maintained above the desired level while speed of the vehicle 10 is allowed to vary, step 28. However, this may be inconvenient to the driver on a steep incline when the vehicle 10 will slow more than is preferred to maintain the desired fuel economy level. Thus, the cruise control system 12 may be arranged to operate at a desired fuel economy level, with a predetermined speed range. In this instance, the vehicle 10 will maintain the desired fuel economy level, step 28. However, the cruise control system 12 will also monitor the vehicle 10 speed, step 30. If the vehicle 10 speed drops below a predetermined level the cruise control system 12 may temporarily adjust the fuel economy level to operate the vehicle 10 at a minimum determined speed, step 32. The vehicle 10 will return to operating at the desired fuel economy level once the vehicle 10 is able to maintain the minimum determined speed with the original desired fuel economy, step 34.

In this embodiment, when the cruise control system 12 is in fuel economy mode 14 the desired fuel economy may be maintained as long as the vehicle 10 is within a predetermined range of the speed at the time the fuel economy mode 14 was initiated by the driver. When the predetermined range is exceeded the fuel economy supplied by the vehicle 10 may be adjusted to maintain the vehicle within the predetermined speed range, until the vehicle 10 speed can be maintained without requiring adjustment from the desired fuel economy. At that time the fuel economy mode 14 will continue operation at the desired fuel economy level, i.e. at the fuel economy level that was selected when the fuel economy mode 14 was initiated.

For example, if the vehicle 10 was traveling at 60 mph when the fuel economy mode 14 was initiated the cruise control system 12 will maintain the vehicle 10 at the selected fuel economy level as long as the vehicle 10 speed is within a predetermined range of the initial vehicle speed, e.g. within 10 mph of the original speed of 60 mph. If the vehicle 10 departs the predetermined range the fuel economy level of the vehicle 10 will be adjusted to maintain the closest limit of the predetermined range. That is, if the vehicle 10 begins to slow down below 50 mph the fuel economy will be adjusted to maintain the vehicle speed at 50 mph. At such time that the vehicle 10 is able to stay within the predetermined range without the adjusted fuel economy level, the cruise control system 12 will return to maintaining the fuel economy for the vehicle at the initial fuel economy level.

As mentioned above, while an increase in fuel economy is desirable it the fuel economy level may be limited from increase to maintain the vehicle within safe operating speeds. Thus, the vehicle speed may be limited by the fuel economy mode 14 of the cruise control system 12 without requiring braking action to slow the vehicle 10.

While the best modes for carrying out the invention have been described in detail the true scope of the disclosure should not be so limited, since those familiar with the art to which this invention relates will recognize various alternative designs and embodiments for practicing the invention within the scope of the appended claims.

### FURTHER EMBODIMENTS

1. A method of operating a cruise control system for a vehicle comprising:
   selecting a fuel economy mode for the cruise control system;
   determining a desired fuel economy; and
   maintaining a fuel economy level of the vehicle at the desired fuel economy.
2. The method of embodiment 1, wherein selecting the fuel economy mode for the cruise control system further comprises a control device for the cruise control selecting the fuel economy mode when an approaching hill is detected.
3. The method of embodiment 2, wherein an approaching hill is detected by one of a longitudinal gravity sensor and a navigation system for the vehicle.
4. The method of embodiment 1, wherein maintaining the fuel economy level of the vehicle at the desired fuel economy includes maintaining a fuel economy level of the vehicle above the desired fuel economy.
5. The method of embodiment 1, wherein maintaining operation of the vehicle at the desired fuel economy includes limiting the fuel economy level to maintain the vehicle operation at a safe travelling speed.
6. The method of embodiment 1, further comprising adjusting the fuel economy level to maintain the vehicle at an operating speed that is within a preselected range from the initial operating speed.
7. The method of embodiment 6, further comprising adjusting the fuel economy level back to the desired fuel economy once the vehicle is operating within the preselected range.
8. The method of embodiment 7, wherein maintaining a fuel economy level of the vehicle at the desired fuel economy includes adjusting a fuel supply to an engine for the vehicle with an engine controller in communication with a fuel supply system and the cruise control system.
9. The method of embodiment 8, further comprising adjusting the desired fuel economy within a control device for the cruise control system.
10. The method of embodiment 1, further comprising:
   selecting a normal operating mode for the cruise control system;
   determining a desired operating speed of the vehicle; and
   maintaining an operating speed of the vehicle at the desired fuel operating speed while in the normal operating mode for the cruise control system.
11. A method of operating a vehicle comprising:
   selecting an operating mode for a cruise control system;
   determining at least one of a desired fuel economy and an initial cruise control speed for the vehicle; and
   adjusting a fuel supply to an engine for the vehicle with an engine controller in communication with a fuel supply system to maintain a fuel economy level of the vehicle at the desired fuel economy when operating in a fuel economy mode.
12. The method of embodiment 11, wherein selecting the fuel economy mode for the cruise control system further comprises a control device for the cruise control selecting the fuel economy mode when an approaching hill is detected.
13. The method of embodiment 12, wherein an approaching hill is detected by one of a longitudinal gravity sensor and a navigation system for the vehicle.
14. The method of embodiment 11, wherein adjusting the fuel supply to the engine includes limiting the fuel supply to the engine to maintain the fuel economy level of the vehicle above the desired fuel economy.
15. The method of embodiment 11, wherein adjusting the fuel supply to the engine includes limiting the fuel economy level to maintain the vehicle operation at a safe travelling speed.
16. The method of embodiment 11, further comprising adjusting the fuel economy level to maintain the vehicle at an operating speed that is within a preselected range from an initial operating speed when the fuel economy mode was initiated.
17. The method of embodiment 16, further comprising adjusting the fuel economy level back to the desired fuel economy once the vehicle is operating within the preselected range.
18. The method of embodiment 11, further comprising adjusting the desired fuel economy within a control device for the cruise control system.

## Claims

1. A method of operating a cruise control system for a vehicle comprising:
selecting a fuel economy mode or another operating mode for the cruise control system;
determining a desired fuel economy; and
maintaining a fuel economy level of the vehicle at the desired fuel economy when operating in the fuel economy mode.

2. The method of claim 1, wherein selecting the fuel economy mode for the cruise control system further comprises a control device for the cruise control selecting the fuel economy mode when an approaching hill is detected; wherein an approaching hill is detected by one of a longitudinal gravity sensor and a navigation system for the vehicle.

3. The method of claim 1, wherein maintaining the fuel economy level of the vehicle at the desired fuel economy includes maintaining a fuel economy level of the vehicle above the desired fuel economy.

4. The method of claim 1, wherein maintaining operation of the vehicle at the desired fuel economy includes limiting the fuel economy level to maintain the vehicle operation at a safe travelling speed; and
further comprising adjusting the fuel economy level to maintain the vehicle at an operating speed that is within a preselected range from the initial operating speed.

5. The method of claim 4, further comprising adjusting the fuel economy level back to the desired fuel economy once the vehicle is operating within the preselected range.

6. The method of claim 5, wherein maintaining a fuel economy level of the vehicle at the desired fuel economy includes adjusting a fuel supply to an engine for the vehicle with an engine controller in communication with a fuel supply system and the cruise control system.

7. The method of claim 6, further comprising adjusting the desired fuel economy within a control device for the cruise control system.

8. The method of claim 1, further comprising:
selecting a normal operating mode for the cruise control system;
determining a desired operating speed of the vehicle; and
maintaining an operating speed of the vehicle at the desired fuel operating speed while in the normal operating mode for the cruise control system.

9. The method of claim 1, further comprising:
determining at least one of a desired fuel economy and an initial cruise control speed for the vehicle; and
adjusting a fuel supply to an engine for the vehicle with an engine controller in communication with a fuel supply system to maintain a fuel economy level of the vehicle at the desired fuel economy when operating in the fuel economy mode.

10. The method of claim 9, wherein selecting the fuel economy mode for the cruise control system further comprises a control device for the cruise control selecting the fuel economy mode when an approaching hill is detected; wherein an approaching hill is detected by one of a longitudinal gravity sensor and a navigation system for the vehicle.

11. The method of claim 9, wherein adjusting the fuel supply to the engine includes limiting the fuel supply to the engine to maintain the fuel economy level of the vehicle above the desired fuel economy.

12. The method of claim 9, wherein adjusting the fuel supply to the engine includes limiting the fuel economy level to maintain the vehicle operation at a safe travelling speed.

13. The method of claim 9, further comprising adjusting the fuel economy level to maintain the vehicle at an operating speed that is within a preselected range from an initial operating speed when the fuel economy mode was initiated.

14. The method of claim 13, further comprising adjusting the fuel economy level back to the desired fuel economy once the vehicle is operating within the preselected range.

15. The method of claim 9, further comprising adjusting the desired fuel economy within a control device for the cruise control system.
